# EUROPÄISCHE PATENTANMELDUNG

(11) **EP 0 724 912 A1**
(43) Veröffentlichungstag der Anmeldung: **07.08.1996**
(21) Anmeldenummer: 95101453.9
(22) Anmeldetag: 03.02.1995
(51) Int. Cl.: B04B 11/04

(54) **Verfahren und Vorrichtung zur Bestimmung von Messgrössen, die für Betriebsparameter einer Zentrifuge repräsentativ sind**

(71) Anmelder: Krauss-Maffei Aktiengesellschaft, D-80997 München (DE)
(72) Erfinder: Feller, Johann, D-83104 Tuntenhausen (DE); Hegnauer, Bruno, D-82131 Gauting (DE)

(57) **Zusammenfassung**

Ein Verfahren zur Bestimmung von Meßgrößen, die für Betriebsparameter einer Zentrifuge, beispielsweise für den Füllstand repräsentativ sind, ist dadurch gekennzeichnet, daß die Schwingungsfrequenzen und -intensitäten der Zentrifuge mittels wenigstens eines Schwingungsaufnehmers an der Zentrifuge als elektrische Signale erfaßt werden. Die Signale werden dann einer Frequenzspektrums-Analyse unterzogen, wobei aus dem erfaßten Frequenzspektrum einzelne harmonische Schwingungen isoliert und anschließend die einer jeweiligen harmonischen Schwingung eigenen Intensitäten (Amplituden) für ein Zeitintervall bestimmt werden.

## Beschreibung

Die Erfindung betrifft ein Verfahren zur Bestimmung von Meßgrößen, die für Betriebsparameter einer Zentrifuge, beispielsweise für den Füllstand, repräsentativ sind, sowie eine Vorrichtung zur Erfassung von Meßgrößen, die für Betriebsparameter einer Zentrifuge, beispielsweise für den Füllstand, repräsentativ sind, wobei die Zentrifuge eine in einem Maschinenrahmen gelagerte und drehbar antreibbare Zentrifugentrommel aufweist, mit zumindest einem Sensor.

Ein derartiges Verfahren und eine derartige Vorrichtung sind aus der DE 37 26 227 C2 bekannt. Dort ragt ein Fühlerarm in das Innere der Zentrifugentrommel und gleitet mit seiner Spitze auf der Oberfläche des in der Zentrifugentrommel vorhandenen Gemisches. Der Fühlerarm ist über eine Achse seitlich aus der Zentrifugentrommel herausgeführt und mit einem Drehwinkelgeber verbunden. Der Füllungsgrad des Gemisches in der Zentrifugentrommel kann so durch die Erfassung des Drehwinkels bestimmt werden. Außerdem kann über einen an der Fühlerspitze vorgesehen Thermofühler die Temperatur der zu ertastenden Oberfläche ermittelt werden.

Nachteilig ist bei diesem Verfahren und bei dieser Vorrichtung, daß Fühlerelemente in den Verfahrensraum der Zentrifuge hineinragen müssen. Auch kann bei dieser Ausführung beim Ertasten einer flüssigen Oberfläche keine Aussage über die Menge des Feststoffes unterhalb der Flüssigkeit getroffen werden. Das hieraus bekannte Verfahren ist lediglich bei Filterzentrifugen und einigen Ausführungen von diskontiniuerlichen Sedimentationszentrifugen anwendbar.

Ein ähnliches Verfahren und eine ähnliche Vorrichtung sind auch aus der Literaturstelle "Der Thermofüllkontrollregler", in: Chemie.-Ing.-Technik 62 (1990) Seite 304 bis 306, bekannt.

Weiterhin sind Füllkontrollregler bekannt, die in diskontinuierlich arbeitenden Filterzentrifugen eingesetzt werden und aus einer Kufe bestehen, welche in die Trommel einschwenkt. Durch die Berührung der mit Trommeldrehzahl rotierenden Flüssigkeit wird die Bewegung der Kufe in die Trommel durch den rotierenden Flüssigkeitsring gestoppt, und durch Anordnung von geeigneten Sensoren an dem sich bewegenden Teil der Kufenlagerung oder des Kufenantriebs kann eine Aussage über den Füllstand in der Zentrifuge getroffen werden.

Es sind auch Verfahren und Vorrichtungen zur radiometrischen Füllstandsüberwachung von Zentrifugen bekannt. Dabei wird die Adsorption von radioaktiver Strahlung gemessen. Die Adsorption der radioaktiven Strahlung ist abhängig von der sich im Strahlenfeld befindenden Masse, so daß über die Dichten der Medien auf eine Füllhohe zurückgerechnet werden kann. Da sich im Verlauf des Filtrationsprozesses der Anteil von Feststoff zu Flüssigkeit ständig ändert, kann keine absolute Aussage darüber getroffen werden, wie das Verhältnis der beiden Medien zueinander ist, oder wie der Gesamtfüllstand bei Gemischen aus Phasen unterschiedlicher Dichte in der Zentrifuge ist.

Zwar können Vorrichtungen zur radiometrischen Füllstandsüberwachung außerhalb des Verfahrensraumes der Zentrifuge angeordnet werden, jedoch ist der Aufwand zum Einsatz von radiometischen Vorrichtungen aufgrund von Sicherheitsbestimmungen sehr hoch.

Es sind auch Vorrichtungen zur Ultraschall-Füllstandsmessung bekannt, wobei ein innerhalb der Zentrifuge angeordneter Ultraschallsensor einen Meßstrahl auf die Oberfläche des Gemisches richtet und den Abstand dazu mißt, woraus sich der Füllstand ermitteln läßt.

Nachteilig ist dabei, daß der Ultraschallsensor innerhalb der Zentrifugentrommel Korrosion ausgesetzt ist und einer aufwendigen Wartung bedarf. Bei einer explosionssicheren Ausgestaltung eines derartigen Ultraschallsensors ist zudem dessen großes Einbauvolumen nachteilig. Außerdem kann der Meßstrahl des auf eine begrenzte Energiedichte angewiesenen und daher in einem tiefen Frequenzbereich arbeitenden Ultraschallsensors bei hoher Relativgeschwindigkeit zwischen Meßkopf und zu messendem Medium abgelenkt werden, wodurch die Betriebssicherheit herabgesetzt wird.

Eine weitere Möglichkeit, den Füllstand einer Zentrifuge zu messen, ist die Kopplung der Zentrifuge mit einer Wägezelle oder einer Kraftmeßdose. Dadurch läßt sich eine Aussage darüber treffen, wieviel Produkt sich innerhalb der Zentrifugentrommel befindet. Vorteilhaft ist dabei, daß sich die Wägezelle außerhalb des Verfahrensraumes befindet. Eine derartige Füllstandsmessung ist jedoch grundsätzlich problematisch, da das Verhältnis zwischen maximalem Füllgewicht der Zentrifuge und dem Eigengewicht der Zentrifuge etwa 1 : 50 bis 1 : 100 beträgt. Außerdem kann auf diese Weise nicht zwischen einer Füllung aus Feststoff oder Flüssigkeit unterschieden werden, so daß nicht feststellbar ist, ob das gemessene Füllungsgewicht dem Filterkuchen oder dem zu filtrierenden Medium zuzuordnen ist. Nachteilig ist weiterhin, daß bei ungleichmäßiger Beladung der Zentrifuge und damit verbundenem unwuchtigen Lauf die Gewichtserfassung über eine Wägezelle durch die unwuchtbedingte Schwingungsüberlagerung wesentlich erschwert wird.

Aus der DE 40 41 923 A1 ist ein Verfahren zur Erfassung des Differenzmomentes zwischen Trommel und Schnecke in einem Dekanter bekannt. Bei diesem Verfahren wird über die Messung des Drehmomentes der Füllgrad im Austragbereich des Dekanters erfaßt. Eine Aussage über den Feststoffgehalt innerhalb des Sedimentationsteils des Dekanters kann jedoch nicht getroffen werden. Auch kann das Verfahren nur eingesetzt werden zur Regelung von Dekantern im oberen Grenzbereich, d.h. bei nahezu 100 % Füllung des Austragsbereiches der Schnecke mit Produkt, wie das beispielsweise bei der Klärschlammabtrennung üblich ist. Eine Steuerung oder Regelung von Dekantern, die weit unterhalb des oberen Grenzbereichs arbeiten, kann mit diesem Verfahren nicht erfolgen.

Bei kontinuierlich arbeitenden Zentrifugen (Dekantern) ist es wichtig, den Anteil des innerhalb der Zentrifuge befindlichen Feststoffes genau zu kennen, um eine optimale Leistung und einen optimalen Trenngrad erreichen zu können. Dazu ist es erforderlich, den Füllstand des Feststoffes im Austragsbereich und das Verhältnis von Feststoff zu Flüssigkeit im gesamten Dekanter zu kennen.

Bei diskontinuierlich arbeitenden Zentrifugen erfolgen die Schritte des Füllens mit dem Fest-Flüssig-Gemisch, des Waschens (Verdrängen von unerwünschter Primärflüssigkeit) und des Trockenschleuderns des Filterkuchens nacheinander. Um den Trennvorgang bei unterschiedlichen Füllbedingungen optimal ablaufen lassen zu können, muß sowohl der Füllstand von Feststoff als auch der Füllstand von Flüssgikeit erfaßt werden. Außerdem ist es wichtig, den Zeitpunkt des Eindringens der Suspensionsflüssigkeit in den Filterkuchen zu erfassen. In Abhängigkeit von den Füllständen und dem Flüssigkeitseintauchpunkt kann die Schrittfolge und die Dauer der Schritte an die jeweiligen Erfordernisse des zu filtrierenden Produktes angepaßt werden. Dabei wird angestrebt, den abgetrennten Feststoff erst dann aus der Zentrifuge auszutragen, wenn die erforderliche Produktqualität (Restfeuchte) erreicht ist. Andererseits soll aber der Zeitpunkt des Erreichens dieser Produktqualität nicht überschritten werden, da hierdurch wertvolle Produktionszeit und damit Produktionskapazität verlorengeht.

**Aufgabe** der vorliegenden Erfindung ist es daher, ein Verfahren der eingangs genannten Gattung zu schaffen, mit dem Meßgrößen für die zur Steuerung einer Zentrifuge erforderlichen Betriebsparameter zuverlässig erfaßt werden können, ohne daß dabei ein erhöhter Bedienungs- und Wartungsaufwand der Zentrifuge entsteht. Außerdem soll eine gattungsgemäße Vorrichtung zur Erfassung von Meßgrößen für Betriebsparameters einer Zentrifuge geschaffen werden, die zur Durchführung dieses Verfahrens geeignet ist und bei niedrigem Wartungsbedarf zuverlässig arbeitet.

Die das Verfahren betreffende Aufgabe wird gemäß dem kennzeichnenden Teil des Anspruchs 1 dadurch gelöst, daß Schwingungsfrequenzen und -intensitäten der Zentrifuge mittels wenigstens eines Schwingungsaufnehmers an der Zentrifuge als elektrische Signale erfaßt werden, daß die Signale einer Frequenzspektrums-Analyse unterzogen werden, daß dabei aus dem erfaßten Frequenzspektrum einzelne harmonische Schwingungen isoliert und anschließend die einer jeweiligen harmonischen Schwingung eigenen Intensitäten (Amplituden) für ein Zeitintervall bestimmt werden.

Durch dieses Verfahren können bereits mit einem einzigen Schwingungsaufnehmer, der außerhalb des Verfahrensraumes an der Zentrifuge angeordnet sein kann, Meßgrößen für eine Vielzahl von Betriebsparametern erfaßt werden. Auf der Grundlage dieser Meßgrößen können beispielsweise Aussagen über den Füllstand, über das Verhältnis von Flüssigkeit zu Feststoff, über den Anteil der Flüssigkeit in der Zentrifuge, über die Umfangsgeschwindigkeit des Flüssigkeitsrings im Verhältnis zur Zentrifuge, über die Massenabnahme beim Trockenschleudern oder über den Füllgrad in Dekantern getroffen werden. Auch kann der Flüssigkeitseintauchpunkt zuverlässig erkannt werden.

Die Erfassung der Meßgrößen mit diesem Verfahren erfolgt in extrem kurzer Zeit und ist unabhängig von der Drehzahl, vom Produkt und von der Temperatur. Außer einer Ermittlung der die Filtration betreffenden Betriebsparameter können aufgrund der erfaßten Meßgrößen auch andere Maschinenparameter, wie beispielsweise der Zustand der Hauptwellenlager oder anderer Maschinenkomponenten gleichzeitig überwacht werden.

Mittels der Frequenzspektrums-Analyse werden die Schwingungsfrequenzen und -intensitäten sowie charakteristische produktspezifische, beim Betrieb der Zentrifuge ohne Füllung nicht vorkommende, Schwingungsfrequenzen und -intensitäten analysiert und können in einer nachgeordneten Auswerteeinrichtung bewertet werden.

Eine weitere Lösung der das Verfahren betreffenden Aufgabe ist dadurch gekennzeichnet, daß die Eigenfrequenz einer betriebsbereiten, beladenen Zentrifugentrommel (sog. Rotoreigenfrequenz) bestimmt wird. Auf diese Weise kann eine durch eine Masseänderung der befüllten Zentrifugentrommel verursachte Verschiebung der Rotoreigenfrequenz ermittelt werden. Eine derartige Verschiebung tritt beispielsweise beim Befüllen der Zentrifugentrommel mit einem zu separierenden Gemisch auf, so daß eine einem gewünschten Füllungsgrad entsprechende Eigenfrequenz ein Maßstab für den gewünschten Füllungsgrad ist. Auch beim Zentrifugieren verschiebt sich die Eigenfrequenz des Rotors, d.h. der mit ihrer Achse versehenen und gefüllten Zentrifugentrommel, aufgrund des mit dem Separationsvorgang verbundenen Austretens von Flüssigkeit aus der Zentrifuge, so daß eine einem gewünschten Filtrationsgrad entsprechende Eigenfrequenz ein Maßstab für das Erreichen dieses Filtrationsgrades ist. Außerdem kann durch die Feststellung der Veränderung der Dämpfung der Rotoreigenfrequenz eine Aussage über die Veränderung des Anteils an Flüssigkeit im Verhältnis zum Filterkuchen am in der Zentrifugentrommel befindlichen Produkt festgestellt werden, da die Dämpfung bei Filterkuchen stärker ist als bei Flüssigkeit.

Der die Vorrichtung betreffende Teil der Aufgabe wird dadurch gelöst, daß der Sensor von einem Schwingungsaufnehmer gebildet ist und mit dem Signaleingang einer Vorrichtung zur Frequenzspektrums-Analyse wirksam verbunden ist.

Besonders vorteilhaft ist dabei, wenn der Sensor am Maschinenrahmen angeordnet ist. Dadurch wird eine gute Zugänglichkeit des Sensors für die Wartung erzielt und der Sensor ist nicht dem in der Zentrifugentrommel befindlichen Produkt ausgesetzt, wodurch der Verschleiß herabgesetzt und eine mögliche Korrosion verhindert ist. Außerdem sind durch die Anbringung des Sensors außerhalb der Zentrifugentrommel am Maschinenrahmen technisch aufwendige Zuleitungen zu einem Meßsystem innerhalb des Verfahrensraumes nicht erforderlich. Die Anordnung des Sensors außerhalb der Zentrifugentrommel sorgt außerdem dafür, daß Toträume innerhalb der Zentrifuge vermieden werden.

Weitere vorteilhafte Ausgestaltungen des Verfahrens und der Vorrichtung sind in Unteransprüchen angegeben. Die Erfindung wird nachfolgend unter Bezugnahme auf die Zeichnung näher erläutert; in dieser zeigt:
- Fig. 1: eine schematische Darstellung einer erfindungsgemäßen Vorrichtung,
- Fig. 2: ein gemäß einem ersten Verfahren der Erfindung erfaßtes Schwingungsfrequenz-Spektrum, und
- Fig. 3: ein gemäß einem zweiten Verfahren der Erfindung erfaßtes Schwingungsfrequenz-Spektrum.

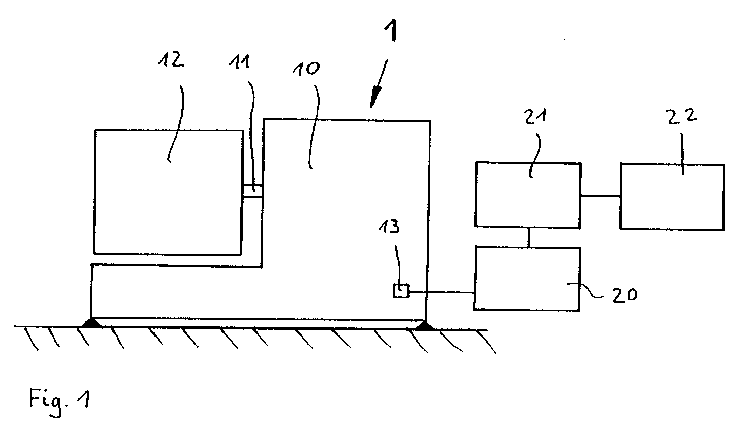

Figur 1 zeigt die schematische Darstellung einer Zentrifuge 1 mit einem Maschinenrahmen 10 und einer Zentrifugentrommel 12, die von einem nicht gezeigten Antrieb über eine Antriebsachse 11 drehbar antreibbar ist. Am Maschinenrahmen 10 ist ein Sensor 13 angebracht, der zur Messung von Schwingungen oder Beschleunigungen ausgelegt ist.

Der Sensor 13 ist mit dem Signaleingang einer Vorrichtung 20 zur Frequenz-Analyse, beispielsweise mittels einer Fast-Fourier-Transformation, wirksam verbunden. Der Signalausgang der Vorrichtung 20 ist mit einem Signaleingang einer Auswerteeinrichtung 21 gekoppelt. Die Auswerteeinrichtung 21 ist ihrerseits mit ihrem Ausgang an einem Eingang einer Anzeigevorrichtung 22 angeschlossen. Die Anzeigevorrichtung 22 kann von einem Schreiber, einem Bildschirm oder einem sonstigen Display gebildet sein.

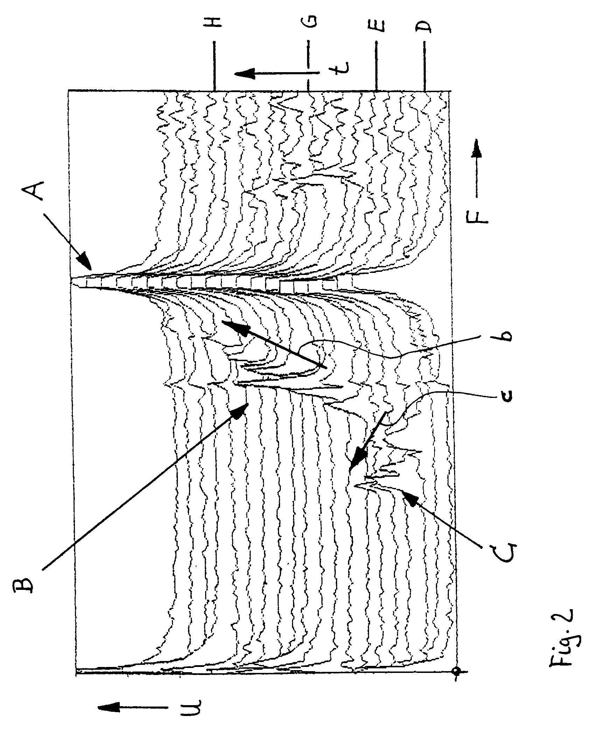

Figur 2 zeigt eine Mehrzahl von zeitlich nacheinander ermittelten und analysierten Schwingungsfrequenzspektren einer Zentrifuge, wobei die Schwingungsfrequenz auf der Abszisse und die Intensität (Amplitude) auf der Ordinate abgetragen sind. Die im wesentlichen parallel verlaufenden Kurven stellen zeitlich nacheinander durchgeführte Analysen dar, wobei die Zeit von unten nach oben (in räumlicher Betrachtung von vorne nach hinten) zunimmt.

Die Schwingungsfrequenzen und Schwingungsintensitäten der Zentrifuge werden von dem Schwingungsaufnehmer 13 als elektrische Signale erfaßt. Diese Signale werden dann der Frequenzspektrums-Analyse derart unterzogen, daß zunächst aus dem erfaßten Frequenzspektrum einzelne harmonische Schwingungen isoliert werden, was beispielsweise nach einer Fourier-Analyse erfolgen kann. Anschließend werden die einer jeweiligen harmonischen Schwingung eigenen Intensitäten (Amplituden) für jedes Meßintervall bestimmt. In Figur 2 sind diese Intensitäten (U) über der Frequenz (F) dargestellt. Wird die Erfassung der Schwingungsfrequenzen und Schwingungsintensitäten und der sich daran anschließenden Analyse für eine Mehrzahl aufeinanderfolgender Zeitintervalle durchgeführt und werden die sich daraus ergebenden Kurven übereinander oder räumlich hintereinander aufgetragen (Zeit t), so ergibt sich die Abbildung der Figur 2.

Der Bereich A bezeichnet die Drehfrequenz der Filtertrommel. Die mit B bezeichneten Intensitätsmaxima niedrigerer Frequenz werden von der Flüssigkeit über dem Filterkuchen verursacht. Die mit C bezeichneten Intensitätsmaxima noch niedrigerer Frequenz werden von der Suspension während des Füllvorgangs verursacht.

Zum Zeitpunkt D wurde mit dem Füllen der Zentrifuge begonnen, während der Füllvorgang zum Zeitpunkt E beendet worden ist. Im Zeitpunkt G ist der Siphon der zur Erstellung der Fig. 2 verwendeten Siphonzentrifuge eingeschaltet worden, wodurch der eigentliche Filtrationsvorgang eingeleitet wird. Im Zeitpunkt H war der Filtrationsvorgang beendet.

Deutlich erkennbar sind das Entstehen des Bereiches C bei Beginn des Füllvorganges und die Frequenzabsenkung entlang des Pfeiles c während des Füllens der Zentrifugentrommel. Nach Beenden des Füllprozesses wird die Flüssigkeit sprunghaft beschleunigt, was durch das Verschwinden des Bereiches C und das Entstehen des höherfrequenten Bereiches B dargestellt wird. Weiterhin ist ein Frequenzanstieg der den Flüssigkeitsring betreffenden Schwingungen während des Filtrationsprozesses zum Filtrationsende hin entlang des Pfeils b erkennbar. Durch Verringerung des Flüssigkeitsanteiles in der Trommel nimmt die Intensität des Bereiches B zum Filtrationsende hin laufend ab. Bei Filtrationsende verschwindet der Bereich B.

Durch Festlegung einer unteren Frequenz des Bereiches C kann der Zeitpunkt zur Beendigung des Füllprozesses ermittelt werden, während durch Erfassen einer oberen Frequenz für den Bereich B und/oder durch Erfassen des Verschwindens des Bereiches B der Zeitpunkt für die Beendigung des Filtrationsprozesses bestimmt werden kann.

Durch geeignete Auswerteverfahren kann beispielsweise ein Ausschnitt (Fenster) einer in Figur 2 dargestellten Kurve betrachtet werden, wobei das Fenster im Bereich unterhalb der Drehfrequenz der Filtertrommel liegt. Innerhalb dieses Fensters kann durch ein geeignetes Erkennungsverfahren die Intensität und Frequenzlage eines auftretenden Peaks festgestellt und dessen Lage- und Intensitätsveränderung beobachtet werden. Bei Erreichen einer vorgegebenen Intensität und/oder einer vorgegebenen Frequenzlage dieses Peaks kann dann eine Aktion zur Steuerung oder Regelung der Zentrifuge eingeleitet werden. So kann beispielsweise eine Beendigung des Befüllungsvorganges oder eine Beendigung des Filtrationsvorganges von einer derartigen Steuerung oder Regelung eingeleitet werden.

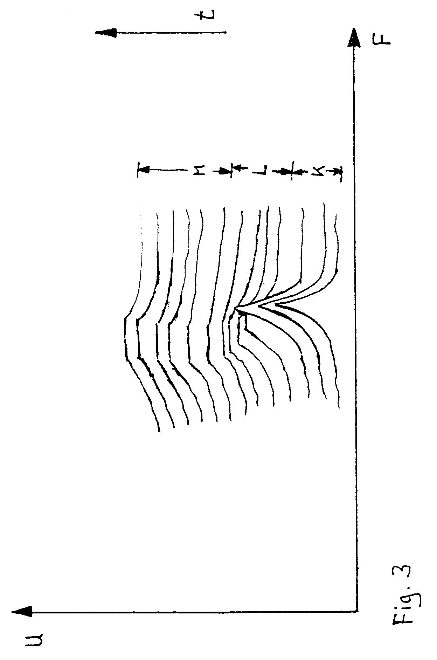

Figur 3 zeigt den Verlauf der Rotoreigenfrequenz sowie der jeweils einer Rotoreigenfrequenz zugeordneten Intensität. Die Darstellung in Fig. 3 entspricht der Darstellung in Fig. 2, wobei einzelne übereinander (räumlich hintereinander) gelegene Kurven Messungen zu unterschiedlichen aufeinanderfolgenden Zeiten wiedergeben. Die Kurve der Rotoreigenfrequenz ist zunächst durch charakteristische schmale Peaks (Bereich K) gekennzeichnet, während beim Beginn des Einfüllens die Peaks niedriger und breiter werden (Bereich L), was auf eine erhöhte Dämpfung schließen läßt. Diese erhöhte Dämpfung wird durch die in die Zentrifugentrommel eingeführte Flüssigkeit hervorgerufen. Mit zunehmenden Zentrifugierprozeß wird die Flüssigkeit aus der Zentrifuge herausgeschleudert und Filterkuchen an der Trommel abgeschieden. Der Filterkuchen erhöht die Dämpfung weiterhin (Bereich M).

Die Gipfelkurve der Rotoreigenfrequenz verlagert sich zunächst in Richtung niedrigerer Frequenzen, da mit Beginn des Einfüllens die Rotormasse erhöht wird. Ist die Flüssigkeit größtenteils abgeschieden worden, so steigt die Eigenfrequenz wieder, liegt jedoch niedriger als die Ausgangsfrequenz vor dem Befüllen der Zentrifuge, was durch den in der Zentrifuge nunmehr enthaltenen Filterkuchen verursacht wird.

## Patentansprüche

1. Verfahren zur Bestimmung von Meßgrößen, die für Betriebsparameter einer Zentrifuge, beispielsweise für den Füllstand von Feststoff und/oder Flüssigkeit, repräsentativ sind,
dadurch **gekennzeichnet,**
daß Schwingungsfrequenzen und -intensitäten der Zentrifuge mittels wenigstens eines Schwingungsaufnehmers an der Zentrifuge als elektrische Signale erfaßt werden,
daß die Signale einer Frequenzspektrums-Analyse unterzogen werden, daß dabei aus dem erfaßten Frequenzspektrum einzelne harmonische Schwingungen isoliert und anschließend die einer jeweiligen harmonischen Schwingung eigenen Intensitäten (Amplituden) für ein Zeitintervall bestimmt werden.

2. Verfahren nach Anspruch 2,
dadurch **gekennzeichnet,**
daß die Frequenzspektrums-Analyse eine Fast-Fourier-Transformation (FFT) umfaßt.

3. Verfahren nach Anspruch 1 oder 2,
dadurch **gekennzeichnet,**
daß die einer jeweiligen Frequenz zugeordneten Intensitäten mit der Intensität vorgegebener Frequenzwerte verglichen werden.

4. Verfahren nach einem der Ansprüche 1 bis 3,
dadurch **gekennzeichnet,**
daß die angegebenen Verfahrensschritte mehrmals nacheinander durchgeführt werden und daß die zeitlichen Veränderungen der einer jeweiligen Frequenz zugeordneten Intensitäten ermittelt werden.

5. Verfahren zur Bestimmung von Meßgrößen, die für Betriebsparameter einer Zentrifuge, beispielsweise für den Füllstand repräsentativ sind,
dadurch **gekennzeichnet,**
daß die Eigenfrequenz einer betriebsbereiten, beladenen Zentrifugentrommel bestimmt wird.

6. Verfahren nach Anspruch 5,
dadurch **gekennzeichnet,**
daß die Dämpfung der Eigenfrequenz bestimmt wird.

7. Verfahren nach Anspruch 5 oder 6,
dadurch **gekennzeichnet,**
daß die Zentrifugentrommel bei der Bestimmung der Eigenfrequenz bzw. der Dämpfung rotiert.

8. Verfahren nach einem der Ansprüche 5 bis 7,
dadurch **gekennzeichnet,**
daß die angegebenen Verfahrensschritte mehrmals nacheinander durchgeführt werden und daß die zeitlichen Veränderungen der jeweiligen Eigenfrequenz bzw. der jeweiligen Dämpfung ermittelt werden.

9. Vorrichtung zur Erfassung von Meßgrößen, die für Betriebsparameter einer Zentrifuge, beispielsweise für, den Füllstand, repräsentativ sind, wobei die Zentrifuge eine in einem Maschinenrahmen gelagerte und drehbar antreibbare Zentrifugentrommel aufweist, mit zumindest einem Sensor,
dadurch **gekennzeichnet,**
daß der Sensor (13) von einem Schwingungsaufnehmer gebildet ist und mit dem Signaleingang einer Vorrichtung (20) zur Frequenzspektrums-Analyse wirksam verbunden ist.

10. Vorrichtung nach Anspruch 9,
dadurch **gekennzeichnet,**
daß der Sensor (13) am Maschinenrahmen angeordnet ist.

11. Vorrichtung nach einem der Ansprüche 9 oder 10,
dadurch **gekennzeichnet,**
daß der Schwingungsaufnehmer einen Beschleunigungsaufnehmer umfaßt.

12. Vorrichtung nach einem der Ansprüche 9 bis 11,
dadurch **gekennzeichnet,**
daß die Vorrichtung zur Frequenzspekrums-Analyse mit ihrem Signalausgang mit dem Signaleingang einer Auswerteeinrichtung (21) gekoppelt ist.

13. Vorrichtung nach einem der Ansprüche 9 bis 12,
dadurch **gekennzeichnet,**
daß der Signalausgang der Auswerteeinrichtung (21) mit dem Signaleingang einer Anzeigevorrichtung (22) verbunden ist.
